(19) Europäisches Patentamt
European Patent Office
Office européen des brevets

(11) **EP 4 480 607 A1**

(12) **EUROPEAN PATENT APPLICATION**
published in accordance with Art. 153(4) EPC

(43) Date of publication:
**25.12.2024 Bulletin 2024/52**

(21) Application number: **23729005.1**

(22) Date of filing: **01.02.2023**

(51) International Patent Classification (IPC):
**B22F 7/00** (2006.01)    **C22C 30/00** (2006.01)
**C22C 30/04** (2006.01)    **C22C 30/06** (2006.01)
**F16D 69/02** (2006.01)    **B22F 1/00** (2022.01)
**B22F 1/05** (2022.01)    **B22F 1/06** (2022.01)
**B22F 1/065** (2022.01)    **C09K 3/14** (2006.01)
**C22C 1/05** (2023.01)

(52) Cooperative Patent Classification (CPC):
**B22F 1/00; B22F 1/05; B22F 1/06; B22F 1/065;
B22F 7/00; C09K 3/14; C22C 1/05; C22C 30/00;
C22C 30/04; C22C 30/06; F16D 69/02**

(86) International application number:
**PCT/JP2023/003184**

(87) International publication number:
**WO 2023/157637 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.02.2022 JP 2022021396**

(71) Applicant: **Tokai Carbon Co., Ltd.**
**Minato-ku**
**Tokyo 107-8636 (JP)**

(72) Inventors:
• **YASUDA, Makoto**
**Tokyo 1078636 (JP)**
• **OKAMURA, Yusuke**
**Tokyo 1078636 (JP)**

(74) Representative: **Eisenführ Speiser**
**Patentanwälte Rechtsanwälte PartGmbB**
**Postfach 10 60 78**
**28060 Bremen (DE)**

(54) **SINTERED METAL FRICTION MATERIAL, AND METHOD FOR MANUFACTURING SAME**

(57) The present invention intends to provide a technique for obtaining a sintered metal friction material with a reduced copper content such that agglomerates can be hardly generated during production, the strength of a compact can be maintained, and wear during use can be suppressed. The present invention provides a sintered metal friction material that is a sintered material of a friction material composition. The friction material composition comprises 42 to 95% by mass of a metal powder for matrix. The metal powder for matrix comprises 20 to 40% by mass of an iron powder based on the mass of the friction material composition and 20 to 40% by mass of a nickel powder based on the mass of the friction material composition. The friction material composition has a copper content of 0.5% by mass or less. The nickel powder comprises a spherical nickel powder and a chained nickel powder.

EP 4 480 607 A1

**Description**

Technical Field

The present invention relates to a sintered metal friction material, and more particularly to a sintered metal friction material with a low copper content.

Background Art

Vehicles such as two-wheeled vehicles and automobiles are provided with friction materials in order to achieve a braking function. The friction material is pressed against a mating material integrally attached to a wheel. A frictional force generated between the mating material and the friction material exhibits the braking function by braking the wheel.
As such a friction material, a sintered metal friction material is known. The sintered metal friction material is a material obtained by compacting and sintering a metal-containing material (hereinafter referred to as a friction material composition). Such sintered metal friction materials have mainly used copper as a raw material from the viewpoints of compactability and the like. However, when the friction material contains copper, wear debris containing copper is generated during use. From the viewpoint of environmental protection, it is required to reduce the generation of copper-containing wear debris. For example, some states in the United States have enacted regulations to restrict the use of copper, because copper-containing wear debris is considered to adversely affect aquatic life.
In regard to the above, for example, Patent Literature 1 (Japanese Patent Application Publication No. 2018-111755) discloses a sintered metal friction material that is a sintered product of a friction material composition containing, as matrix metals, 20 to 40% by mass of an iron powder, 20 to 40% by mass of a nickel powder, 0.5 to 10% by mass of a zinc powder, 0.5 to 5% by mass of a tin powder, 0.5 to 4% by mass of a copper powder, and 0.5 to 5% by mass of a sintering aid powder, and also containing a friction modifier.

Citation List

Patent Literature

Patent Literature 1: Japanese Patent Application Publication No. 2018-111755

Summary of Invention

As described above, the copper powder has been used from the viewpoints of compactability and the like. When the copper powder is used, the copper powder functions as a binder in the process of mixing the copper powder with other powder materials and compacting the obtained mixture. Therefore, the copper powder contributes to the strength of the compact. When the content of the copper powder is reduced, the compact becomes so brittle that it is difficult to obtain a sintered metal friction material.
In preparation of a friction material composition, the metal powder is mixed with other materials. If the constitution of other components is devised in order to increase the strength of the compact, agglomerates may be generated in some cases depending on the mixing conditions in the process of mixing the metal powder with the other materials.
In addition, the sintered metal friction material is also required to be resistant to wear during use.
It has been difficult to obtain a sintered metal friction material with a reduced copper content such that agglomerates can be hardly generated, the strength of a compact can be maintained, and wear during use can be suppressed.
Accordingly, an object of the present invention is to provide a technique capable of obtaining a sintered metal friction material with a reduced copper content such that agglomerates can be hardly generated during production, the strength of a compact can be maintained, and wear during use can be suppressed.
The present inventors have found that the above problem can be solved by using a friction material composition having a particular constitution. Specifically, the present invention provides the followings.

[1] A sintered metal friction material that is a sintered material of a friction material composition, wherein the friction material composition comprises 42 to 95% by mass of a metal powder for matrix, the metal powder for matrix comprises 20 to 40% by mass of an iron powder based on the mass of the friction material composition, and 20 to 40% by mass of a nickel powder based on the mass of the friction material composition, the friction material composition has a copper content of 0.5% by mass or less, and the nickel powder comprises a spherical nickel powder and a chained nickel powder.
[2] The sintered metal friction material according to [1], wherein the following formula (1) is satisfied:

$$(\text{Formula 1}) \ 0.25 \leq \text{Ni}_{2\text{vol}}/(\text{Ni}_{1\text{Vol}} + \text{Ni}_{2\text{vol}}) \leq 0.75,$$

where $\text{Ni}_{1\text{Vol}}$ denotes a volume of the spherical nickel powder and $\text{Ni}_{2\text{vol}}$ denotes a volume of the chained nickel powder.

[3] The sintered metal friction material according to [2], wherein the following formula (2) is satisfied:

$$(\text{Formula 2}) \ 0.33 \leq \text{Fe}_{\text{vol}}/(\text{Fe}_{\text{vol}} + \text{Ni}_{1\text{Vol}} + \text{Ni}_{2\text{vol}}) \leq 0.66,$$

where $\text{Fe}_{\text{vol}}$ denotes a volume of the iron powder.

[4] The sintered metal friction material according to [1] to [3], wherein the friction material composition further comprises 0.5 to 10% by mass of a zinc powder.

[5] The sintered metal friction material according to any one of [1] to [4], wherein the friction material composition further comprises 0.5 to 5% by mass of a tin powder.

[6] A method for producing a sintered metal friction material comprising the steps of: mixing raw materials comprising an iron powder and a nickel powder to prepare a friction material composition; and sintering the friction material composition to preparing a sintered metal friction material, wherein the friction material composition contains 42 to 95% by mass of a metal powder for matrix, the metal powder for matrix contains 20 to 40% by mass of an iron powder based on the mass of the friction material composition, and 20 to 40% by mass of an nickel powder based on the mass of the friction material composition, the friction material composition has a copper content of 0.5% by mass or less, and the nickel powder comprises a spherical nickel powder and a chained nickel powder.

Thus, an object of the present invention is to provide a technique capable of obtaining a sintered metal friction material with a reduced copper content such that agglomerates can be hardly generated during production, the strength of a compact can be maintained, and wear during use can be suppressed.

Description of Embodiment

Hereinafter, an embodiment of the present invention will be described in detail. A present embodiment relates to a sintered metal friction material. The sintered metal friction material according to the present embodiment is a sintered compact of a friction material composition. In the present embodiment, the "friction material" refers to a material that generates friction when being in contact with a mating material and that achieves its function by the generated friction.

Hereinafter, a constitution of a friction material composition will be described.

The friction material composition according to the present embodiment has a low copper content. Specifically, the copper content in the friction material composition is 0.5% by mass or less. More preferably, the friction material composition is copper-free. The wording "copper-free" herein means that the friction material composition does not contain copper in a substantial sense, and does not mean that the friction material composition does not contain copper even at a level of impurities that are contained unavoidably in the friction material composition, that is, contained unintentionally in the friction material composition.

The copper content can be measured according to a method specified in SAE J2975. Specifically, the copper content can be obtained by cutting the sintered metal friction material with a drill, collecting the obtained cut powder, and performing ICP mass spectrometry.

The friction material composition contains 42 to 95% by mass of a metal powder for matrix. The metal powder for matrix is a metal powder to constitute a portion of a matrix metal in the sintered metal friction material that is a sintered compact. The metal powder for matrix can be rephrased as a metal powder to undergo a sintering reaction during sintering.

The metal powder for matrix contains 20 to 40% by mass of an iron powder based on the mass of the friction material composition and 20 to 40% by mass of a nickel powder based on the mass of the friction material composition. The nickel powder contains a spherical nickel powder and a chained nickel powder.

According to the above constitution, the combination use of the spherical nickel powder and the chained nickel powder as the nickel powder makes it possible to maintain the strength of a compact without generating agglomerates during preparation of a friction material composition even when the copper content is reduced.

As the iron powder, one or more kinds selected from reduced iron powders, cast iron powders, and the like may be used and a reduced iron powder is preferable. The reduced iron powder has a higher melting point by about 300°C than the cast iron powder. For this reason, the use of the reduced iron powder makes it possible to easily obtain a sintered metal friction material having excellent frictional properties under high temperature.

As the reduced iron powder, an iron powder obtained by, for example, heat-treating an iron ore at a temperature of 600 to 1200°C in an atmosphere of hydrogen gas or ammonia gas may be used.

The iron powder has a particle diameter of preferably 10 to 500 $\mu$m, more preferably 20 to 300 $\mu$m, and further

preferably 40 to 150 $\mu$m.

The above particle diameter range of the iron powder means a value measured by a sieving method.

The content of the iron powder in the friction material composition is 20 to 40% by mass as described above, and is preferably 23 to 37% by mass, more preferably 25 to 35% by mass, and further preferably 30 to 34% by mass.

The content of the iron powder within the above range makes it possible to enhance the strength of the friction material and allows the friction material to exhibit suitable fade resistance by containing desired amounts of other components.

As similar to the iron powder, the nickel powder is also used to constitute a portion of the matrix metal in the sintered metal friction material.

As described above, the spherical nickel powder and the chained nickel powder are used in combination as the nickel powder.

The "spherical nickel powder" refers to a nickel powder having a loose bulk specific gravity of 1.0 to 3.0 g/cm$^3$.

Meanwhile, the "chained nickel powder" refers to a nickel powder having a loose bulk specific gravity of 0.4 to 0.8 g/cm$^3$.

In other words, the combination use of the two kinds of nickel powders different in loose bulk specific gravity makes it possible to enhance the strength of a compact without generating agglomerates in preparation of the friction material composition.

As the nickel powder (hereinafter, simply-expressed nickel powder refers to both the spherical nickel powder and the chained nickel powder), one or more kinds selected from powders prepared by an atomization (spraying) method and powders prepared by a carbonyl nickel method may be used. The use of these nickel powders makes it possible to easily enhance the strength of a friction material and allows the friction material to achieve excellent heat resistance even under high output and exhibit suitable fade resistance while having a higher frictional coefficient.

The particle diameter of the spherical nickel powder is, for example, 1 to 200 $\mu$m, preferably 3 to 100 $\mu$m, and more preferably 5 to 20 $\mu$m.

The particle diameter of the chained nickel powder is, for example, 0.5 to 100 $\mu$m, preferably 1 to 50 $\mu$m, and more preferably 3 to 20 $\mu$m.

The above particle diameters of the nickel powders each mean a value ($D_{50}$) measured by a laser diffraction method.

The total content of the nickel powder in the friction material composition is 20 to 40% by mass, preferably 23 to 37% by mass, and more preferably 25 to 35% by mass.

The content of the nickel powder within the above range also makes it possible to enhance the strength of the friction material and allows the friction material to exhibit suitable fade resistance by containing desired amounts of other components.

Moreover, it is preferable that the friction material composition satisfy the following formula (1):

$$(\text{Formula 1}) \ 0.25 \leq \text{Ni}_{2\text{vol}}/(\text{Ni}_{1\text{Vol}} + \text{Ni}_{2\text{vol}}) \leq 0.75,$$

where $\text{Ni}_{1\text{Vol}}$ denotes a volume of the spherical nickel powder and $\text{Ni}_{2\text{vol}}$ denotes a volume of the chained nickel powder.

The ratio of "$\text{Ni}_{2\text{vol}}/(\text{Ni}_{1\text{Vol}} + \text{Ni}_{2\text{vol}})$" is more preferably 0.50 to 0.75.

In addition, it is preferable that the friction material composition satisfy the following formula (2):

$$(\text{Formula 2}) \ 0.33 \leq \text{Fe}_{\text{vol}}/(\text{Fe}_{\text{vol}} + \text{Ni}_{1\text{Vol}} + \text{Ni}_{2\text{vol}}) \leq 0.66,$$

where $\text{Fe}_{\text{vol}}$ denotes a volume of the iron powder.

The ratio of "$\text{Fe}_{\text{vol}}/(\text{Fe}_{\text{vol}} + \text{Ni}_{1\text{Vol}} + \text{Ni}_{2\text{vol}})$" is preferably 0.33 to 0.50.

The total content percentage of the iron powder and the nickel powder in the friction material composition is preferably 40 to 80% by mass, more preferably 46 to 74% by mass, and further preferably 50 to 70% by mass.

The total content percentage of the iron powder and the nickel powder within the above range allows the friction material to more easily exhibit the effect of enhancing the strength and suitable fade resistance by containing desired amounts of other components.

The metal powder for matrix may contain other metal powders if necessary in addition to the above iron powder and nickel powder. As the other metal powders, there are a zinc powder, a tin powder, and a sintering aid powder.

The zinc powder is not particularly limited and a powder prepared by the atomization (spraying) method may be used.

The zinc powder has a particle diameter of preferably 5 to 200 $\mu$m, more preferably 10 to 100 $\mu$m, and further preferably 20 to 65 $\mu$m.

The above particle diameter range of the zinc powder means a value ($D_{50}$) measured by the laser diffraction method.

The content of the zinc powder in the friction material composition is, for example, 0.5 to 10% by mass, preferably 1 to 9% by mass, and more preferably 5 to 7% by mass.

The content of the zinc powder within the above range leads to an enhanced strength of the friction material to enhance wear resistance, and makes it easier to inhibit the friction material from adhering to the mating material during friction and impart a desired frictional coefficient to the friction material.

The tin powder has a particle diameter of preferably 5 to 200 $\mu$m, more preferably 10 to 100 $\mu$m, and further preferably 20 to 50 $\mu$m.

The above particle diameter range of the tin powder means a value ($D_{50}$) measured by the laser diffraction method.

The content of the tin powder in the friction material composition is 0.5 to 5% by mass, preferably 1 to 4% by mass, and more preferably 1 to 3% by mass.

The content of the tin powder within the above range leads to an enhanced strength of the friction material to enhance the friction resistance, and makes it easier to inhibit the friction material from adhering to the mating material during friction and impart a desired frictional coefficient to the friction material.

The sintering aid powder is not particularly limited. For example, one or more kinds selected from iron boride powders, phosphorus iron powders, yttrium oxide, magnesium oxide, aluminum oxide, hafnium oxide, and the like may be used. One or more kinds selected from iron boride powders, phosphorus iron powders, phosphorus copper powders, and phosphorus bronze powders are preferable.

The iron boride powder has a particle diameter of preferably 5 to 200 $\mu$m, more preferably 10 to 100 $\mu$m, and further preferably 20 to 50 $\mu$m.

The phosphorus iron powder has a particle diameter of preferably 5 to 200 $\mu$m, more preferably 10 to 100 $\mu$m, and further preferably 10 to 30 $\mu$m.

The above particle diameter range of the sintering aid powder means a value ($D_{50}$) measured by the laser diffraction method.

The content of the sintering aid powder in the friction material composition is 0.5 to 5% by mass, preferably 0.5 to 4% by mass, and more preferably 0.5 to 3% by mass.

The content of the sintering aid powder within the above range leads to an enhanced sinterability of the iron powder and the nickel powder to enhance the strength of the friction material, makes it easier to flatten a torque waveform during friction (makes it easier to suppress the occurrence of brake squeal), and makes it easier to inhibit the friction material from adhering to the mating material during friction and impart a desired frictional coefficient to the friction material.

The total content percentage of the metal powder for matrix in the friction material composition only has to be 42 to 95% by mass as described above, but is preferably 49.5 to 90% by mass and more preferably 59 to 84% by mass.

The total content percentage of the matrix metal within the above range makes it possible to enhance the strength of the friction material and allows the friction material to exhibit suitable fade resistance.

The friction material composition may contain another additive if necessary in addition to the metal powder for matrix. An example of the other additive is a friction modifier. The friction modifier is not particularly limited. For example, one or more kinds selected from lubricating materials and hard materials may be used.

As the lubricating materials, one or more kinds selected from graphite powders, coke powders, calcium fluoride powders, barium fluoride powders, boron nitride powders, and molybdenum disulfide powders may be used.

As the hard materials, one or more kinds selected from alumina powders, mullite powders, zircon sand powders, and silica stone powders may be used.

Besides, as the friction modifier, one or more kinds selected from manganese powders, iron oxide powders, Fe-Mo alloy powders, FeSi alloy powders, Fe-W alloy powders, mica powders, and zeolite powders may be used. The powder such as the manganese powder mentioned above is not a substance that sinters during sintering and therefore is not a metal powder for matrix.

The content of the friction modifier in the friction material composition is preferably 5 to 58% by mass, more preferably 10 to 50.5% by mass, and further preferably 16 to 41% by mass.

The content of the friction modifier in the friction material composition within the above range makes it possible to obtain excellent wear resistance and heat resistance even under high output, to achieve a higher frictional coefficient, and to suppress reductions in the frictional coefficient and the wear resistance even when the friction material is used repeatedly.

In addition, the friction material composition may contain, as a reinforcing fiber if necessary, one or more kinds selected from carbon fibers, silicon carbide fibers, boron fibers, silica-alumina fibers, glass fibers, aramid fibers, steel fibers, and other inorganic fibers, and metal fibers (excluding copper- and copper alloy-based fibers).

The sintered metal friction material can be produced by forming a compact as appropriate by using the above friction material composition in a conventionally known method and then performing a sintering process on the compact.

For example, the sintered metal friction material can be produced by mixing all the components to prepare the friction material composition, followed by pressure compacting to obtain a compact, and then pressure-sintering on the compact.

As process conditions in the compacting and the pressure sintering, conventionally known conditions may be employed.

The sintered metal friction material according to the present embodiment is suitably usable as a clutch material and a brake material, more specifically, a clutch facing material, a brake lining material, a brake pad material, and the like. The mating material is not particularly limited but is preferably a SUS material.

According to the present embodiment, the following effects can be produced by employing the friction material composition having the specific constitution described above.

First, when a copper-free friction material composition is used, it is generally difficult to obtain a sintered metal friction material because the compacting strength of the compact cannot be maintained. In contrast, according to the present embodiment, the combination use of the two kinds of nickel and the employment of the specific constitution make it possible for a friction material composition to achieve the high compacting strength in spite of being copper-free.

As the nickel, the spherical nickel powder having high fluidity and the chained nickel powder for building an inter-powder network in a green compact are used in combination.

As described above, it is preferable that the friction material composition satisfy the following formula (1):

$$(\text{Formula 1}) \; 0.25 \leq \text{Ni}_{2\text{vol}}/(\text{Ni}_{1\text{Vol}} + \text{Ni}_{2\text{vol}}) \leq 0.75,$$

where $\text{Ni}_{1\text{Vol}}$ denotes the volume of the spherical nickel powder and $\text{Ni}_{2\text{vol}}$ denotes the volume of the chained nickel powder.

Here, when the ratio of "$\text{Ni}_{2\text{vol}}/(\text{Ni}_{1\text{Vol}} + \text{Ni}_{2\text{vol}})$" is 0.25 or more, the compacting strength can be maintained and a compact is easy to obtain. Meanwhile, when the ratio of "$\text{Ni}_{2\text{vol}}/(\text{Ni}_{1\text{Vol}} + \text{Ni}_{2\text{vol}})$" is 0.75 or less, entanglement of filaments is less likely to occur, which makes it less likely to form agglomerates and impair the fluidity of the powders.

In the case where the mating material is a SUS material, use of a friction material composition containing copper tends to reduce a braking power due to the lubricity of the copper. In contrast, according to the present embodiment, the friction material composition having a low copper content is used. For this reason, even when the mating material is a SUS material, appropriate adhesive wear due to seizure occurs and a certain frictional force can be obtained from the initial stage of sliding.

Examples

Hereinafter, Examples will be described in order to describe the present invention in more details. However, the present invention should not be interpreted by being limited to Examples described below.

Examples 1 to 3 and Comparative Examples 1 to 7

Table 1 presents constitutions of Examples 1 to 3 and Comparative Example 1 to 7. The unit of the numeric values specified in Table 1 is "parts by mass".

According to each of the constitutions specified in Table 1, a friction material composition was prepared by mixing a metal powder for matrix (a copper powder, a tin powder, a zinc powder, an iron powder, a phosphorus iron powder, a stainless steel powder, a spherical nickel powder, and a chained nickel powder) and other additives (a manganese powder, $SiO_2$, mullite, fluorite, Zr sand, graphite, and coke). The obtained friction material composition was pressed and compacted into a predetermined shape, thereby obtaining a compact. The obtained compact was placed on a steel plate plated with copper and sintered at a temperature of 850°C in a reducing atmosphere to obtain a sintered metal friction material.

As the copper powder, a powder having a particle diameter of 40 $\mu$m was used.

As the tin powder, a powder having a particle diameter of 30 $\mu$m was used.

As the zinc powder, a powder having a particle diameter of 30 $\mu$m was used.

As the iron powder, a powder having a particle diameter of 80 $\mu$m was used.

As the phosphorus iron powder, a powder having a particle diameter of 20 $\mu$m was used.

As the spherical nickel powder, a powder having a particle diameter of 10 $\mu$m and a loose bulk specific gravity of 1.6 to 2.6 g/cm$^3$ was used.

As the chained nickel powder, powder having a particle diameter of 8 $\mu$m and a loose bulk specific gravity of 0.50 to 0.80 g/cm$^3$ was used.

Examples 1 to 3 and Comparative Examples 1 to 7 were evaluated in terms of the presence or absence of agglomerates, the transverse rupture strength of the compact, and the shear strength and wear property of the sintered metal friction material. Specifically, the evaluation was conducted as follows.

(Presence or Absence of Agglomerates)

Whether agglomerates were generated or not during preparation of the friction material composition was observed by visual check or using a microscope or the like.

(Transverse Rupture Strength)

A compact was fabricated by using a mold of 13 mm×33 mm and the transverse rupture strength of the compact (before sintering) was measured by a three-point flexural test. The distance between fulcrums was set to 25 mm.

(Shear Strength)

Using the obtained sintered metal friction material, the shear strength was measured in accordance with JIS D4422.

(Wear Property)

Using the obtained sintered metal friction material, a dry dynamo test was conducted by using a stainless steel disk as the mating material. The test conditions were set to conditions conforming to JASO T204, inertia was set to 12.5 $kgm^2$, and the friction material properties (frictional coefficient, wear amount (mm), and torque curve) were measured by changing the initial speed and deceleration. Test codes were set as specified in Table 2.

Table 3 presents the measurement results of the presence or absence of agglomerates, the transverse rupture strength, and the shear strength. In addition, Table 3 also presents the values of the Fevol ratio ($Fe_{vol}/(Fe_{vol}$ + Niivo; + $Ni_{2vol}$)), $Ni_{2vol}/(Ni_{1Vol} + Ni_{2vol})$, and the Cu content. In Table 3, the Cu content in Examples 1 to 3 and Comparative Examples 3 to 6 is not 0 wt% because copper was contained as unavoidable impurities. In Table 3, the physical properties are evaluated as pass "o" if the transverse rupture strength is 150 $cm^2$ or more and the shear strength is 5.0 MPa or more, or otherwise are evaluated as fail "×".

Table 4 presents the test results of the wear property.

As presented in Comparative Examples 1 to 3, when the copper content was reduced, the strength (transverse rupture strength) of the compact was reduced. In Comparative Example 3 in which only the spherical nickel powder was used as the nickel powder, in particular, the transverse rupture strength was reduced to 127 ($N/cm^2$). On the other hand, in Comparative Examples 4 and 5 in which only the chained nickel powder was used as the nickel powder, the transverse rupture strength was satisfactory but agglomerates were generated. In Comparative Example 6 in which the content of the chained nickel powder was reduced from the content in Example 4, the problem of agglomerates was solved but the amount of pad wear was as large as 0.69 mm and the wear property was impaired.

In contrast, in Examples 1 to 3 in which the spherical nickel powder and the chained nickel powder were used as the nickel powder, the transverse rupture strength of 150 $N/cm^2$ or more and the shear strength of 5.0 MPa or more were obtained, which means that the friction materials had the physical properties at practically non-problematic levels. Moreover, the problem of agglomerates did not occur. Furthermore, the amount of pad wear was satisfactorily 0.6 mm or less.

[Table 1]

Table 1

|  | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Cu Powder |  |  |  | 41 | 4 |  |  |  |  |
| Ti Powder | 2 | 2 |  | 2 | 2 | 2 | 2 | 5 | 2 |
| Zn Powder | 6 | 6 |  | 6 | 6 | 6 | 6 |  | 4 |
| Fe Powder | 30 | 34 | 31 |  | 30 | 30 | 30 | 33 | 53 |
| P-Fe Powder | 2 | 2 |  |  | 2 | 2 | 2 | 2 | 2 |

(continued)

| | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Stainless Steel Powder | | | | 8 | | | | | |
| Spherical Ni Powder | 20 | 15 | 25 | 15 | 32 | 30 | | | |
| Chained Ni Powder | 10 | 15 | 15 | | | | 30 | 30 | 10 |
| Mn Powder | | | | 3 | | | | | |
| $SiO_2$ | 4 | 4 | 5 | 2 | 4 | 4 | 4 | 4 | 4 |
| Mullite | 3 | 4 | 4 | 3 | 3 | 3 | 3 | 3 | 3 |
| Fluorite | 2 | 2 | 4 | 2 | 2 | 2 | 2 | 2 | 2 |
| Zr Sand | 6 | 4 | 4 | 6 | 4 | 6 | 6 | 6 | 8 |
| Graphite | 12 | 12 | 12 | 12 | 9 | 12 | 12 | 12 | 12 |
| Coke | 3 | | | | 3 | 3 | 3 | 3 | |
| Total | 100 | 100 | 100 | 100 | 100 | 100 | 100 | 100 | 100 |

[Table 2]

| Table 2 General Performance Test in accordance with JASO T-240 | | | | | | | |
|---|---|---|---|---|---|---|---|
| Test Items | | Braking Initial Speed km/h | Braking Method | Braking Input MPa | Brake Deceleration m/s$^2$ | Number of Brake Applications | Cooling Wind Speed m/s | Remarks |
| Check Before Burnishing | | 50 | Constant Deceleration | | 3.0 | 10 | 11 | |
| Effectiveness Test I | | 50, 100 | Constant Input | 0.5, 1.0, 1.5, 2.0, 3.0, 4.0 | | 3 per point | 11 | |
| Burnishing | | 50 | Constant Deceleration | | 3.0 | 100 | 11 | |
| Effectiveness Test II | | 50, 100, 130 | Constant Input | 0.5, 1.0, 1.5, 2.0, 3.0, 4.0 | | 3 per point | 11 | |
| Re-Burnishing | | 50 | Constant Deceleration | | 3.0 | 30 | 11 | |
| Fade Test I | Basic Performance Test | 60 | Constant Deceleration | | 4.5 | 3 | 11 | |
| | Heating Test | 100 | Constant Deceleration | | 3.0 | 10 | 11 | Interval 1000 m |
| | Hot Braking Test | 60 | Constant Deceleration | | 4.5 | 1 | 11 | Within 60 sec |
| Re-Burnishing | | 60 | Constant Deceleration | | 3.0 | 30 | 11 | |
| Fade Test II | Baseline Check | 100 | Constant Deceleration | | 3.0 | 3 | 11 | |
| | Fade Test | 100 | Constant Deceleration | | 3.0 | 15 | 11 | Interval 30 sec |
| | Recovery Test | 100 | Constant Deceleration | | 3.0 | 15 | 11 | Interval 120 sec |

(continued)

| Table 2 General Performance Test in accordance with JASO T-240 | | | | | | | |
|---|---|---|---|---|---|---|---|
| Test Items | Braking Initial Speed km/h | Braking Method | Braking Input MPa | Brake Deceleration m/s$^2$ | Number of Brake Applications | Cooling Wind Speed m/s | Remarks |
| Re-Burnishing | 50 | Constant Deceleration | | 3.0 | 30 | 11 | |
| Effectiveness Test III | 50, 100, 130 | Constant Input | 0.5, 1.0, 1.5, 2.0, 3.0, 4.0 | | 3 per point | 11 | |

[Table 3]

Table 3

| | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Transverse Rupture Strength N/cm$^2$ | 176 | 279 | 200 | 412 | 177 | 127 | 284 | 240 | 340 |
| Shear Strength MPa | 5.6 | 8.3 | 5.0 | 11.3 | 12.6 | 7.1 | 7.3 | 6.5 | 6.5 |
| Pass/Fail of Physical Properties | ○ | ○ | ○ | ○ | ○ | × | ○ | ○ | ○ |
| Fevol Ratio | 0.43 | 0.41 | 0.36 | 0 | 0.55 | 0.56 | 0.29 | 0.31 | 0.69 |
| $Ni_{2vol}/(Ni_{1Vol} + Ni_{2vol})$ | 0.60 | 0.75 | 0.65 | 0 | 0 | 0 | 1 | 1 | 1 |
| Presence of Agglomerates | No | No | No | No | No | No | Yes | Yes | No |
| Cu Content (wt%) | 0.2 | 0.1 | 0.2 | 40.8 | 3.8 | 0.2 | 0.2 | 0.1 | 0.1 |

[Table 4]

Table 4

| | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Effectiveness Test I (Before Initial Burnishing) | 0.57 | 0.57 | 0.58 | 0.53 | 0.59 | - | 0.56 | 0.55 | 0.52 |
| Effectiveness Test II (After Initial Burnishing) | 0.57 | 0.57 | 0.59 | 0.56 | 0.61 | - | 0.57 | 0.57 | 0.55 |
| Effectiveness Test II (After Heat Application) | 0.60 | 0.61 | 0.62 | 0.62 | 0.62 | - | 0.60 | 0.62 | 0.60 |

(continued)

|  | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Amount of Pad Wear (mm) | 0.53 | 0.43 | 0.58 | 0.49 | 0.51 | - | 0.52 | 0.50 | 0.69 |

**Claims**

1.  A sintered metal friction material that is a sintered material of a friction material composition, wherein

    the friction material composition comprises 42 to 95% by mass of a metal powder for matrix,
    the metal powder for matrix comprises:

        20 to 40% by mass of an iron powder based on the mass of the friction material composition; and
        20 to 40% by mass of a nickel powder based on the mass of the friction material composition,

    the friction material composition has a copper content of 0.5% by mass or less, and
    the nickel powder comprises a spherical nickel powder and a chained nickel powder.

2.  The sintered metal friction material according to claim 1, wherein the following formula (1) is satisfied:

$$\text{(Formula 1) } 0.25 \leq Ni_{2vol}/(Ni_{1Vol} + Ni_{2vol}) \leq 0.75,$$

    where $Ni_{1Vol}$ denotes a volume of the spherical nickel powder and $Ni_{2vol}$ denotes a volume of the chained nickel powder.

3.  The sintered metal friction material according to claim 2, wherein the following formula (2) is satisfied:

$$\text{(Formula 2) } 0.33 \leq Fe_{vol}/(Fe_{vol} + Ni_{1Vol} + Ni_{2vol}) \leq 0.66,$$

    where $Fe_{vol}$ denotes a volume of the iron powder.

4.  The sintered metal friction material according to claims 1 to 3, wherein the friction material composition further comprises 0.5 to 10% by mass of a zinc powder.

5.  The sintered metal friction material according to any one of claims 1 to 4, wherein the friction material composition further comprises 0.5 to 5% by mass of a tin powder.

6.  A method for producing a sintered metal friction material comprising the steps of:

        mixing raw materials comprising an iron powder and a nickel powder to prepare a friction material composition; and
        sintering the friction material composition to prepare a sintered metal friction material, wherein
        the friction material composition contains 42 to 95% by mass of a metal powder for matrix,
        the metal powder for matrix contains 20 to 40% by mass of an iron powder based on the mass of the friction material composition, and 20 to 40% by mass of a nickel powder based on the mass of the friction material composition,
        the friction material composition has a copper content of 0.5% by mass or less, and
        the nickel powder comprises a spherical nickel powder and a chained nickel powder.

## INTERNATIONAL SEARCH REPORT

| International application No. |
|---|
| **PCT/JP2023/003184** |

### A. CLASSIFICATION OF SUBJECT MATTER

**B22F 7/00**(2006.01)i; **C22C 30/00**(2006.01)i; **C22C 30/04**(2006.01)i; **C22C 30/06**(2006.01)i; **F16D 69/02**(2006.01)i; **B22F 1/00**(2022.01)i; **B22F 1/05**(2022.01)i; **B22F 1/06**(2022.01)i; **B22F 1/065**(2022.01)i; **C09K 3/14**(2006.01)i; **C22C 1/05**(2023.01)i

FI: C09K3/14 520G; B22F1/00 M; B22F1/05; B22F1/06; B22F1/065; B22F7/00 B; C09K3/14 520L; C22C1/05 Q; C22C30/00; C22C30/04; C22C30/06; F16D69/02 D

According to International Patent Classification (IPC) or to both national classification and IPC

### B. FIELDS SEARCHED

Minimum documentation searched (classification system followed by classification symbols)

B22F7/00; C22C30/00; C22C30/04; C22C30/06; F16D69/02; B22F1/00; B22F1/05; B22F1/06; B22F1/065; C09K3/14; C22C1/05

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/168968 A1 (JFE PREC CORPORATION) 20 September 2018 (2018-09-20) claims, examples | 1-6 |
| A | WO 2018/131287 A1 (TOKAI CARBON KK) 19 July 2018 (2018-07-19) claims, examples | 1-6 |
| A | WO 2019/003969 A1 (AKEBONO BRAKE IND) 03 January 2019 (2019-01-03) claims, examples | 1-6 |
| A | WO 2020/090725 A1 (AKEBONO BRAKE IND) 07 May 2020 (2020-05-07) claims, examples | 1-6 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
**Information on patent family members**

International application No.

**PCT/JP2023/003184**

| Patent document cited in search report | | | Publication date (day/month/year) | Patent family member(s) | | | Publication date (day/month/year) |
|---|---|---|---|---|---|---|---|
| WO | 2018/168968 | A1 | 20 September 2018 | US | 2020/0263750 | A1 | |
| | | | | claims, examples | | | |
| | | | | EP | 3597718 | A1 | |
| WO | 2018/131287 | A1 | 19 July 2018 | US | 2021/0041002 | A1 | |
| | | | | claims, examples | | | |
| | | | | EP | 3569672 | A1 | |
| | | | | CN | 110168041 | A | |
| WO | 2019/003969 | A1 | 03 January 2019 | US | 2020/0158200 | A1 | |
| | | | | claims, examples | | | |
| | | | | EP | 3647390 | A1 | |
| | | | | CN | 110832049 | A | |
| WO | 2020/090725 | A1 | 07 May 2020 | US | 2022/0003290 | A1 | |
| | | | | claims, examples | | | |
| | | | | EP | 3875561 | A1 | |
| | | | | CN | 112996878 | A | |

Form PCT/ISA/210 (patent family annex) (January 2015)

**EP 4 480 607 A1**

**REFERENCES CITED IN THE DESCRIPTION**

**Patent documents cited in the description**

- JP 2018111755 A